# EUROPÄISCHE PATENTSCHRIFT

(11) **EP 2 823 878 B1**
(45) Veröffentlichungstag und Bekanntmachung des Hinweises auf die Patenterteilung: **18.02.2015**
(21) Anmeldenummer: 13003487.9
(22) Anmeldetag: 10.07.2013
(51) Int. Cl.: B01F 5/06, F01N 3/20, F01N 3/28, B01F 3/04

(54) **Mehrstufiger Plattenmischer**
Multi-stage plate mixer
Mélangeur à plaques à plusieurs étages

(43) Veröffentlichungstag der Anmeldung: 14.01.2015
(73) Patentinhaber: Eberspächer Exhaust Technology GmbH & Co. KG, 66539 Neunkirchen (DE)
(72) Erfinder: Calvo, Silvia, 73730 Esslingen (DE)
(74) Vertreter: Diehl & Partner GbR

(56) Entgegenhaltungen:
- EP-A1- 2 574 750
- EP-A1- 2 594 330

## Beschreibung

Die vorliegende Erfindung betrifft eine Misch- und/oder Verdampfungseinrichtung für eine Abgasanlage einer Brennkraftmaschine, insbesondere eines Kraftfahrzeugs. Die Erfindung betrifft außerdem eine mit einer derartigen Einrichtung ausgestattete Abgasanlage sowie einen mit einer derartigen Einrichtung ausgestatteten SCR-Katalysator.

Üblicherweise ist eine Abgasanlage einer Brennkraftmaschine mit Einrichtungen zum Reinigen bzw. Nachbehandeln der von der Brennkraftmaschine weggeführten Abgase ausgestattet. Dabei kann es erforderlich sein, ein flüssiges Edukt in den Abgasstrom einzubringen, darin zu verdampfen und mit dem Abgas zu vermischen. Beispielsweise kann es erforderlich sein, stromauf eines Oxidationskatalysators einen Kraftstoff dem Abgas zuzumischen, um durch eine exotherme Umsetzung des Kraftstoffs im Oxidationskatalysator eine Aufheizung des Abgasstroms zu bewirken. Der aufgeheizte Abgasstrom kann dann stromab des Oxidationskatalysators dazu genutzt werden, eine weitere Abgasnachbehandlungseinrichtung auf Betriebstemperatur bzw. auf Regenerationstemperatur aufzuheizen, beispielsweise einen anderen Katalysator oder einen Partikelfilter. Ferner sind SCR-Systeme bekannt, die mit selektiver katalytischer Reaktion arbeiten und mit einem SCR-Katalysator ausgestattet sind, der NOₓ aus dem Abgasstrom aufnimmt. Stromauf des SCR-Katalysators wird dem Abgasstrom ein geeignetes Reduktionsmittel zugeführt, beispielsweise Ammoniak bzw. Harnstoff, vorzugsweise eine wässrige Harnstofflösung. Im SCR-Katalysator bewirkt das Ammoniak dann eine Umwandlung der eingelagerten Stickoxide in Stickstoff und Wasser.

Für alle in flüssiger Form dem Abgasstrom zugeführten Edukte gilt, dass der gewünschte Effekt nur dann zufriedenstellend erreichbar ist, wenn zwischen der Einleitungsstelle des flüssigen Edukts und einem Verbrauchsort des Edukts eine hinreichende Verdampfung des Edukts sowie eine hinreichende Durchmischung des gasförmigen Edukts mit dem Abgasstrom erfolgen kann. Zu diesem Zweck kommen die eingangs genannten Misch- und/oder Verdampfungseinrichtungen zum Einsatz, die im Strömungspfad des Abgases zwischen der Einleitungsstelle des Edukts und der Verbrauchsstelle des Edukts angeordnet werden.

Aus der EP 2 594 330 A1 und EP 2 574 750 A1 ist jeweils eine Misch- und/oder Verdampfungseinrichtung mit den Merkmalen des Oberbegriffs des unabhängigen Anspruchs 1 bekannt.

Es ist Aufgabe der vorliegenden Erfindung, für eine Einrichtung der eingangs genannten Art bzw. für einen damit ausgestatteten SCR-Katalysator bzw. eine damit ausgestattete Abgasanlage eine verbesserte oder zumindest eine andere Ausführungsform anzugeben, die sich durch einen einfacheren und somit preiswerteren Aufbau auszeichnet, wobei außerdem ein geringerer Durchströmungswiderstand bzw. Gegendruck sowie eine verbesserte Vermischung des Edukts mit dem Abgas angestrebt ist. Zudem kann flüssiges Edukt, das sich an Wänden der Abgasanlage zu einem Wandfilm ansammelt, wieder dem Abgasstrom zugeführt werden.

Dieses Problem wird bei der vorliegenden Erfindung insbesondere durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Misch- und/oder Verdampfungseinrichtung mit einem Tragkörper auszustatten, der einen quer zur Axialrichtung der Einrichtung verlaufenden, flachen, durchströmbaren Querschnitt der Einrichtung in der Umfangsrichtung umschließt. Der Trägerkörper definiert somit keinen kreisförmigen Querschnitt, sondern einen länglichen bzw. flachen Querschnitt, derart, dass der Trägerkörper zwei einander gegenüberliegende lange Seitenwände und zwei einander gegenüberliegende kurze Seitenwände aufweist, wobei die kurzen Seitenwände jeweils die beiden langen Seitenwände miteinander verbinden. Durch die erfindungsgemäß vorgeschlagene Ausgestaltung des Trägerkörpers mit einem flachen Querschnitt ist es möglich, zumindest an einer langen Seitenwand mehrere Leitschaufeln anzuordnen, die in Richtung zur anderen langen Seitenwand abstehen und die gegenüber der Axialrichtung unter einem Anstellwinkel angestellt sind.

Durch diese Bauweise erstrecken sich die Leitschaufeln quer zur Axialrichtung und sind außerdem sowohl quer zur Axialrichtung als auch quer zu ihrer Längsrichtung nebeneinander angeordnet. Die Axialrichtung der Einrichtung entspricht dabei einer Hauptströmungsrichtung des Abgases durch die Einrichtung. Diese Hauptströmungsrichtung berücksichtigt dabei Strömungsablenkungen, Querströmungen, Rückströmungen, Verwirbelungen und dergleichen innerhalb des durchströmbaren Querschnitts nicht. Am jeweiligen axialen Ende der jeweiligen langen Seitenwand wird somit eine Reihe nebeneinander angeordneter, insbesondere parallel zueinander verlaufender Leitschaufeln bereitgestellt, die jeweils eine Strömungsablenkung in Richtung einer kurzen Seitenwand bewirken.

Zum einen bieten die Leitschaufeln der jeweiligen geradlinigen Leitschaufelreihe eine vergleichsweise große Auftrefffläche für stromauf davon in den Abgasstrom eingebrachtes flüssiges Edukt, so dass die Flüssigkeit auf den Leitschaufeln auftreffen und daran verdampfen, bzw. durch den Aufprall in kleinere Flüssigkeitströpfen aufgeteilt werden kann. Zum anderen bewirken die Leitschaufeln eine intensive Strömungsumlenkung, was die Durchmischung des verdampften Edukts mit dem Abgasstrom fördert.

Um den Gegendruck der oben beschriebenen Misch- und/oder Verdampfungseinrichtung zu verringern und um eine bessere Vermischung des Edukts mit dem Abgas zu erreichen, können in Axialrichtung der Einrichtung mehrere Leitschaufeln bzw. Leitschaufelreihen angeordnet sein. So können an den jeweiligen axialen Enden der langen Seitenwände Leitschaufelreihen und zusätzlich zwischen diesen, d.h. beispielsweise in Axialrichtung in der Mitte zwischen beiden axialen Enden Zusatzleitschaufelreihen angeordnet sein. Diese können um eine parallel zur Axialrichtung verlaufenden Achse gebogen oder gegenüber der Axialrichtung unter einem Anstellwinkel angestellt sein.

Durch diese Anordnung von Zusatzleitschaufein zwischen den an den axialen Enden angeordneten Leitschaufeln wird eine zusätzliche Prozessstufe geschaffen, in der die bereits verdampfte Flüssigkeit bzw. noch bestehende Flüssigkeitströpfchen ein weiteres Mal verwirbelt und stärker mit dem Abgasstrom vermischt werden. Zudem können die noch nicht verdampften Flüssigkeitströpfchen auf den Zusatzleitschaufeln auftreffen und an diesen verdampfen. Auf diese Weise wird die Effizienz der gesamten Anordnung verbessert, wodurch insgesamt eine Verringerung der Anzahl an Leitschaufeln oder eine Verkleinerung der insgesamt in den Abgasstrom hineinragenden Auftrefffläche der Leitschaufeln bei gleichbleibender Durchmischung ermöglicht wird. Somit kann eine weitere Reduzierung des Gegendrucks erreicht werden.

Ein wie oben beschriebener "flacher" durchströmbarer Querschnitt charakterisiert sich dadurch, dass er in einer ersten senkrecht zur Axialrichtung verlaufenden Richtung einen Durchmesser aufweist, der größer ist als ein Durchmesser in einer senkrecht zur Axialrichtung und senkrecht zur ersten Richtung verlaufenden zweiten Richtung. Insbesondere kann der Durchmesser in der einen Richtung mindestens doppelt so groß sein wie in der anderen Richtung. Ausgeschlossen sind dadurch kreisförmige Querschnitte, während ovale und elliptische Querschnitte ebenfalls flach sind oder sein können. Die Begriffe "lang" und "kurz" sind hier nicht absolut, sondern relativ zueinander zu verstehen, so dass die langen Seitenwände in der Umfangsrichtung länger sind als die kurzen Seitenwände. Je nach Geometrie des durchströmbaren Querschnitts der Einrichtung sind die langen Seitenwände zweckmäßig eben, während die kurzen Seitenwände gekrümmt sein können.

Entsprechend einer besonders vorteilhaften Ausführungsform stehen die Zusatzleitschaufeln von der Seitenwand, an der sie angeordnet sind, im spitzen Winkel ab und sind um eine parallel zur Axialrichtung verlaufenden Achse gebogen.

Durch diese Ausführung wird der Abgasstrom innerhalb des Trägerkörpers in Rotation versetzt bzw. verwirbelt, wodurch eine besonders intensive Vermischung des Edukts mit dem Abgas erfolgt. Weiterhin können noch nicht verdampfte Flüssigkeitströpfchen auf die Zusatzleitschaufeln auftreffen und an diesen verdampfen.

Entsprechend einer weiteren vorteilhaften Ausführungsform ist die Länge der Zusatzleitschaufeln so gewählt, dass ein freies Ende der Zusatzleitschaufeln über eine mittig zwischen den langen Seitenwänden verlaufende Längsmittelebene hinausragt.

Auf diese Weise kann mit einer geringen Anzahl an Zusatzleitschaufeln ein großer Strömungsquerschitt des Abgasstroms erfasst und eine gute Vermischung des Edukts mit dem Abgas in dem Bereich zwischen den an den axialen Enden angeordneten Leitschaufeln erzielt werden.

Gemäß einer anderen vorteilhaften Ausführungsform sind jeweils zwei an gegenüberliegenden Seitenwänden angeordnete Zusatzleitschaufeln so angeordnet, dass sie in Axialrichtung im selben Abstand zum axialen Ende der jeweiligen Seitenwände angeordnet sind.

Auf diese Weise stehen sich jeweils zwei Leitschaufeln, die nicht an derselben Seitenwand angeordnet sind, in Strömungsrichtung auf gleicher Höhe gegenüber und können so ein Leitschaufelpaar bilden, das bei der Ausbildung von bestimmten Strömungsverhältnissen und insbesondere von rotierenden Strömungsabschnitten bzw. Wirbeln zusammenwirkt.

Bei einer weiteren vorteilhaften Ausführungsform sind entlang zumindest einer langen Seitenwand an einem axialen Ende quer zur Axialrichtung mehrere Leitschaufeln so zueinander angeordnet, dass die den kurzen Seitenwänden am nächsten gelegenen Leitschaufeln in Axialrichtung einen größeren Abstand zu dem gegenüberliegenden axialen Ende aufweisen als die quer zur Axialrichtung jeweils näher an einer Mitte des Trägerkörpers angeordneten Leitschaufeln.

Die quer zur Strömungsrichtung stehenden Leitschaufelflächen bilden so auf der stromaufwärtigen Seite des Trägerkörpers eine für das Abgas durchlässige konkave Außenfläche des Trägerkörpers. Bei gleichbleibendem durchströmbaren Querschnitt des Trägerkörpers können somit mehr Leitschaufeln bzw. eine größere Auftrefffläche in dem Abgasstrom angeordnet werden.

Gemäß einer anderen vorteilhaften Ausführungsform stehen die Zusatzleitschaufeln von der langen Seitenwand im Wesentlichen orthogonal ab und erstrecken sich in Richtung der jeweils gegenüberliegenden Wand, wobei sie gegenüber der Axialrichtung angestellt sind.

Durch die geradlinige Ausführung der Leit- und der Zusatzleitschaufeln wird der Abgasstrom innerhalb des Trägerkörpers nicht in Rotation versetzt, wobei durch die aufeinanderfolgenden Stufen der Leitschaufelreihen dennoch eine gute Durchmischung erzielt werden kann. Durch die Vermeidung einer Rotation des Abgasstroms innerhalb des Trägerkörpers kann der Strömungswiderstand bzw. der Gegendruck der Misch- und/oder Verdampfungseinrichtung verringert werden.

Bei einer weiteren vorteilhaften Ausführungsform ist an zumindest einer kurzen Seitenwand eine weitere Leitschaufel angeordnet, wobei die weitere Leitschaufel im spitzen Winkel von der kurzen Seitenwand absteht und um eine orthogonal zu der mittig zwischen den langen Seitenwänden verlaufenden Längsmittelebene verlaufenden Achse gebogen ist.

Durch Zentrifugalkräfte, die auf in den Abgasstrom eingebrachte oder mitgeführte Flüssigkeitströpfchen wirken, wenn das Abgas aus einer geradlinigen Bewegung abgelenkt wird, können die Flüssigkeitströpfchen gegen Wände der Abgasanlage geschleudert werden und dort einen Wandfilm aus flüssigem Edukt bilden. Die weiteren Leitschaufeln an den kurzen Seitenwänden des Trägerkörpers können Flüssigkeit aus solch einem Wandfilm von der Wand wegführen und erneut in den Abgasstrom einbringen. Zudem bewirken die in den Abgasstrom eingebrachten weiteren Leitschaufeln eine Neuorientierung des Strömungsverlaufs in diesem Bereich, wodurch eine bessere Vermischung und eine Optimierung der Strömungsverteilung erzielt werden kann. Auf diese Weise wird die Effektivität der Misch- und/oder Verdampfungseinrichtung erhöht.

Gemäß einer anderen vorteilhaften Ausführungsform sind alle Leitschaufeln integral an der jeweiligen Seitenwand ausgeformt. Auf diese Weise können die Leitschaufeln und die Seitenwände besonders einfach und preiswert, beispielsweise als Stanz- und Umformteil aus einem Blechteil hergestellt werden.

Bei einer weiteren vorteilhaften Ausführungsform sind alle Seitenwände integral am Trägerkörper ausgeformt. Auf diese Weise kann die gesamte Einrichtung besonders einfach und preiswert aus einem Stanz- und Umformteil aus einem Blechteil hergestellt werden.

Eine erfindungsgemäße Abgasanlage umfasst zumindest einen SCR-Katalysator, eine Reduktionsmittelzuführeinrichtung, die zumindest einen Injektor zum Zuführen eines Reduktionsmittels zum Abgasstrom stromauf des SCR-Katalysators aufweist, und wenigstens eine Misch- und/oder Verdampfungseinrichtung der vorbeschriebenen Art, die zwischen dem wenigstens einen Injektor und dem wenigstens einen SCR-Katalysator angeordnet ist.

Ein erfindungsgemäßer SCR-Katalysator umfasst dagegen ein Gehäuse, in dem zumindest ein SCR-Katalysatorelement angeordnet ist, sowie wenigstens eine Misch- und/oder Verdampfungseinrichtung der vorbeschriebenen Art, die im Gehäuse des SCR-Katalysators stromauf des wenigstens einen SCR-Elements angeordnet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu er läuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
Fig. 1 eine stark vereinfachte, schaltplanartige Prinzipdarstellung einer Brennkraftmaschine mit einer Abgasanlage,
Fig. 2 eine stark vereinfachte, schaltplanartige Ansicht eines SCR Katalysators,
Fig. 3 jeweils einen Querschnitt des SCR-Katalysators entsprechend Schnittlinien III in Figur 2, bei verschiedenen Ausführungsformen A und B,
Fig. 4 eine isometrische Ansicht einer Ausführungsform der Misch- und/oder Verdampfungseinrichtung,
Fig. 5 eine Aufsicht auf die in Fig. 4 gezeigte Ausführungsform,
Fig. 6 eine Schnittansicht entlang der Schnittlinie IV in Fig. 5,
Fig. 7 eine isometrische Ansicht einer weiteren Ausführungsform der Misch- und/oder Verdampfungseinrichtung, und
Fig. 8 eine isometrische Ansicht einer weiteren Ausführungsform der Misch- und/oder Verdampfungseinrichtung.

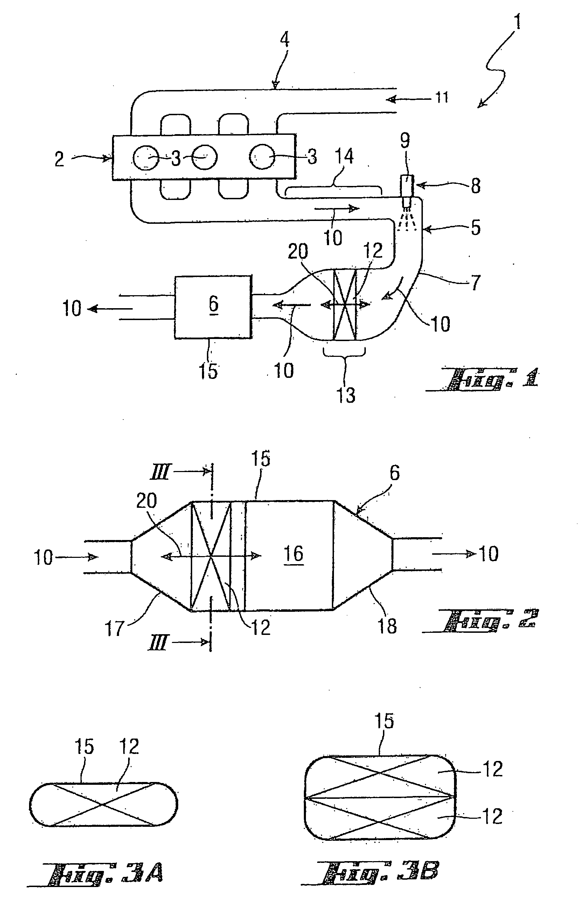

Entsprechend Figur 1 umfasst eine Brennkraftmaschine 1 in üblicher Weise einen Motorblock 2, der mehrere Zylinder 3 aufweist. Eine Frischluftanlage 4 versorgt die Zylinder 3 des Motorblocks 2 mit Frischluft. Ein entsprechender Frischluftstrom ist dabei durch einen Pfeil 11 angedeutet. Eine Abgasanlage 5 führt im Betrieb der Brennkraftmaschine 1 Verbrennungsabgase von den Zylindern 3 des Motorblocks 2 ab. Ferner bewirkt die Abgasanlage 5 eine Abgasreinigung bzw. Abgasnachbehandlung. Hierzu ist die Abgasanlage 5 mit wenigstens einem SCR Katalysator 6 ausgestattet, der auf geeignete Weise in einen Abgasstrang 7 der Abgasanlage 5 eingebunden ist. Der SCR Katalysator kann dabei auch als ein Partikelfilter bzw. Dieselpartikelfilter ausgeführt sein, der mit einer entsprechenden Beschichtung versehen ist. Ferner umfasst die Abgasanlage 5 eine Reduktionsmittelzuführeinrichtung 8, die zumindest einen Injektor 9 bzw. ein Rohr 9 aufweist, mit dessen Hilfe ein Reduktionsmittel in einen Abgasstrom 10 eingebracht werden kann, der im Betrieb der Brennkraftmaschine 1 im Abgasstrang 7 strömt und durch Pfeile angedeutet ist. Die Eindüsung des flüssigen Reduktionsmittels in den Abgasstrom 10 erfolgt dabei stromauf des SCR-Katalysators 6.

Ferner umfasst die Abgasanlage 5 zumindest eine Misch- und/oder Verdampfungseinrichtung 12, die im Folgenden verkürzt mit Einrichtung 12 bezeichnet wird. Die Einrichtung 12 ist dabei im Abgasstrang 7 zwischen dem Injektor 9 und dem SCR-Katalysator 6 angeordnet, so dass das Abgas mit dem zugeführten Reduktionsmittel zuerst die Einrichtung 12 durchströmen muss, bevor das Gemisch zum SCR-

Im Unterschied dazu zeigt Figur 2 eine Ausführungsform, bei welcher der SCR Katalysator 6 und die Einrichtung 12 eine integrale Einheit bilden. Hierzu ist im Gehäuse 15 des SCR-Katalysators 6 zumindest ein SCR-Katalysatorelement 16 angeordnet, wobei im Gehäuse 15 stromauf dieses SCR-Katalysatorelements 16 außerdem die Einrichtung 12 angeordnet ist. Somit sind die Einrichtung 12 und das SCR-Katalysatorelement 16 in einem gemeinsamen Gehäuse 15 angeordnet.

Im Beispiel der Figur 2 umfasst das Gehäuse 15 einen Einlasstrichter 17 und einen Auslasstrichter 18, wobei die Einrichtung 12 und das SCR-Katalysatorelement 16 zwischen den beiden Trichtern 17, 18 angeordnet sind.

Gemäß den Figuren 3A und 3B kann das Gehäuse 15 zumindest im Bereich der Einrichtung 12 einen flachen Querschnitt besitzen, an den die jeweilige Einrichtung 12 angepasst ist. Figur 3A zeigt dabei eine Ausführungsform, bei welcher der durchströmbare Querschnitt des Gehäuses 15 mit Hilfe einer einzigen Einrichtung 12 ausgefüllt ist. Im Unterschied dazu zeigt Figur 3B eine Ausführungsform, bei welcher der durchströmbare Querschnitt des Gehäuses 15 mit Hilfe von zwei nebeneinander angeordneten Einrichtungen 12 ausgefüllt ist. Entsprechendes gilt dann auch für die Anordnung der Einrichtung 12 im Abgasstrang 7, so dass auch dort zumindest zwei Einrichtungen 12 nebeneinander im Bereich 13 angeordnet sein können, um den durchströmbaren Querschnitt des Abgasstrangs 7 auszufüllen.

Da der durchströmbare Querschnitt der Einrichtung 12 flach ist, besitzt der Tragkörper zwei lange Seitenwände 21, 22, die einander gegenüberliegen, sowie zwei kurze Seitenwände 23, 24 die ebenfalls einander gegenüberliegen. Die kurzen Seitenwände 23, 24 verbinden dabei jeweils die beiden langen Seitenwände 21, 22.

Des Weiteren ist die Einrichtung 12 mit mehreren Leitschaufeln 25 ausgestattet, die dabei jeweils von einer der langen Seitenwänden 21, 22 in Richtung zur anderen langen Seitenwand 21, 22 abstehen und dabei an einem axialen Ende 26 oder 27 der Einrichtung 12 bzw. des Tragkörpers bzw. der jeweiligen langen Seitenwand 21, 22 abstehen. Sofern die Abgasströmung entsprechend dem Pfeil 10 orientiert ist, bildet das eine, zuerst angeströmte axiale Ende 26 eine Anströmseite, die im Folgenden ebenfalls mit 26 bezeichnet wird, während das andere axiale Ende 27 dann eine Abströmseite bildet, die im Folgenden ebenfalls mit 27 bezeichnet wird.

Die Leitschaufeln 25 erstrecken sich jeweils geradlinig sowie parallel zueinander. Ferner sind die Leitschaufeln 25 bei den hier gezeigten Ausführungsformen jeweils eben ausgestaltet. Außerdem sind sie gegenüber der Axialrichtung 20 angestellt. Bei den gezeigten Beispielen beträgt ein Anstellwinkel der Leitschaufeln 25 gegenüber der Axialrichtung 20 jeweils 45° im Rahmen üblicher Herstellungstoleranzen.

Die Leitschaufeln 25 erstrecken sich quer zur Axialrichtung 20 und sind außerdem quer zu ihrer Längserstreckung und quer zur Axialrichtung 20 nebeneinander in einer Reihe angeordnet, die auch als Schaufelreihe 28 bezeichnet werden kann.

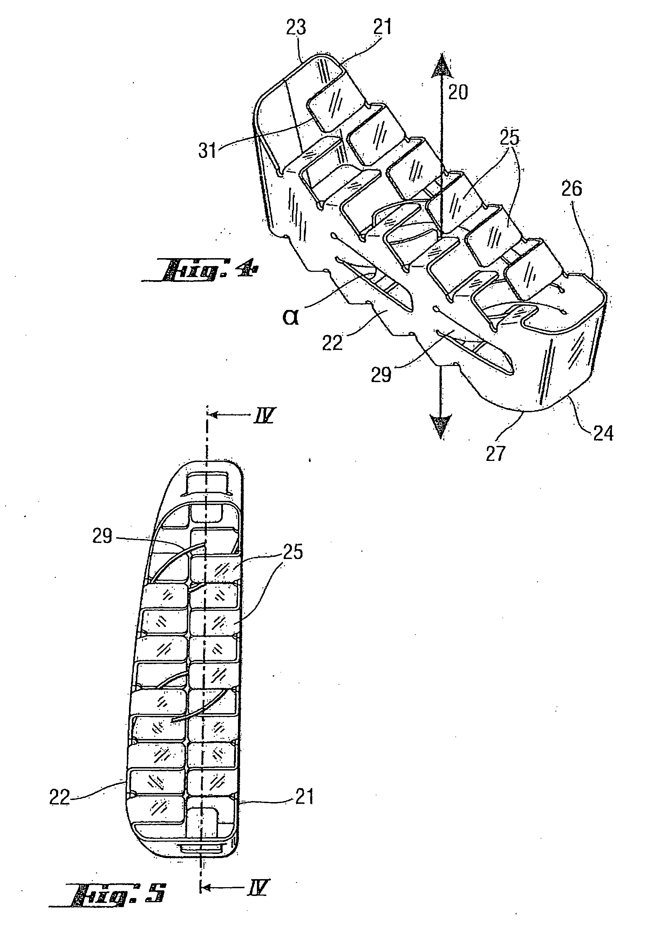

Bei den Ausführungsformen der Figuren 4-8 ist vorgesehen, dass an beiden langen Seitenwänden 21, 22 zumindest an einem axialen Ende 26, 27 jeweils Leitschaufeln 25 angeordnet sind, die in Richtung zur anderen langen Seitenwand 21, 22 abstehen. Bei den hier gezeigten Ausführungsformen sind dadurch am jeweiligen axialen Ende 26, 27, also an der Anströmseite 26 bzw. an der Abströmseite 27 jeweils zwei nebeneinander angeordnete, parallel zueinander verlaufende Schaufelreihen 28 vorgesehen. Beispielhaft sind hier die sich gegenüberliegenden Leitschaufeln 25 so dimensioniert, dass sie sich ausgehend von der zugehörigen langen Seitenwand 21, 22 bis zu einer Längsmittelebene erstrecken, die mittig zwischen den beiden langen Seitenwänden 21, 22 verläuft. Alternativ sind auch Ausführungsformen denkbar, bei denen nur an jeweils einer langen Seitenwand 21 oder nur an jeweils einem axialen Ende 26 Leitschaufelreihen 28 angeordnet sein können.

In einer weiteren alternativen Ausführungsform können sich die Leitschaufeln 25 der beiden langen Seitenwände 21, 22 soweit in Richtung der anderen Seitenwand 21, 22 erstrecken, dass sich die Leitschaufeln 25 der einen langen Seitenwand 21 bis in die Lücken zwischen benachbarten Leitschaufeln 25 der anderen Seitenwand 22 hineinerstrecken, so dass letztlich eine gemeinsame Leitschaufelreihe 28 gebildet wird, die durch die Leitschaufeln 25 der beiden langen Seitenwänden 21, 22 gebildet wird, wobei sich innerhalb dieser gemeinsamen Leitschaufelreihe 28 die Leitschaufeln 25 der beiden langen Seitenwände 21, 22 abwechseln.

Bei den hier gezeigten Ausführungsformen sind die Leitschaufeln 25 jeweils so angeordnet und dimensioniert, dass sie beabstandet zu der jeweiligen langen Seitenwand 21, 22, von der sie ausgehen, freistehend enden bzw. ein freies Ende 31 aufweisen. So sind die Leitschaufeln 25 der gezeigten Ausführungsformen insbesondere kontaktfrei zur jeweils gegenüberliegenden langen Seitenwand 21, 22 und kontaktfrei zu den anderen Leitschaufeln 25.

Sofern wie in den Ausführungsformen der Figuren 4 - 8 erkennbar an beiden axialen Enden 26, 27 Leitschaufeln 25 vorgesehen sind, können diese entweder in derselben Richtung oder entgegengesetzt zur Axialrichtung 20 angestellt sein. Die Leitschaufeln 25, die am selben axialen Ende 26, 27, jedoch an gegenüberliegenden langen Seitenwänden 21, 22 angeordnet sind, sind in den gezeigten Ausführungsformen entgegengesetzt zur Axialrichtung 20 angestellt. Mit anderen Worten, an der Anströmseite 26 und/oder an der Abströmseite 27 sind die Leitschaufeln 25 der einen Schaufelreihe 28, die an der einen langen Seitenwand 21 ausgebildet ist, entgegengesetzt zu den Leitschaufeln 25 der anderen Schaufelreihe 28, die an der anderen langen Seitenwand 22 ausgebildet sind, zur Axialrichtung 20 angestellt.

In einer in den Figuren 4 - 6 dargestellten Ausführungsform sind an beiden langen Seitenwänden 21, 22 in einem Abstand s in Axialrichtung 20 zu einem axialen Ende 26 Zusatzleitschaufeln 29 angeordnet. Diese stehen in einem spitzen Winkel α von der jeweiligen langen Seitenwand 21, 22 ab und sind um eine parallel zur Axialrichtung 20 verlaufenden Achse so gebogen, dass ihr freien Ende 31 im Wesentlichen der gegenüberliegenden langen Seitenwand zuweist. In dieser Ausführungsform sind die Zusatzleitschaufeln 29 nicht zur Axialrichtung 20 angestellt, da die Umlenkung des Abgasstroms durch den gebogenen Verlauf der Zusatzleitschaufeln 29 erfolgt. Aufgrund der Anstellung der Leitschaufeln 25 strömt der Abgasstrom im Inneren des Trägerkörpers nicht laminar parallel zur Axialrichtung 20, sondern in verschiedenen Winkeln bzw. verwirbelt dazu. Daher treffen einzelne Bereiche des Abgasstroms so auf die gebogenen Flächen der Zusatzleitschaufeln 29, dass zwei um parallel zur Axialrichtung 20 verlaufende Achsen rotierende Strömungen ausgebildet werden. Auf diese Weise kann eine sehr gute Durchmischung des gasförmigen Edukts mit dem Abgasstrom erfolgen.

In der in den Figuren 4 - 6 dargestellten Ausführungsform sind zudem weitere Leitschaufeln 30 an den kurzen Seitenwänden 23, 24 angeordnet. Diese stehen in einem spitzen Winkel β von den kurzen Seitenwänden 23, 24 ab und sind in Strömungsrichtung um eine orthogonal zur Axialrichtung (20) und orthogonal zu der mittig zwischen den langen Seitenwänden (21, 22) verlaufenden Längsmittelebene verlaufenden Achse so gebogen, dass sie in Richtung der gegenüberliegenden kurzen Seitenwand 23, 24 abstehen. Durch diese weiteren Leitschaufeln 30 kann ein Wandfilm aus flüssigem Edukt, der sich an Wänden der Abgasanlage durch daran anhaftende Tröpfchen gebildet werden kann, wieder in den Abgasstrom zurückgeführt werden.

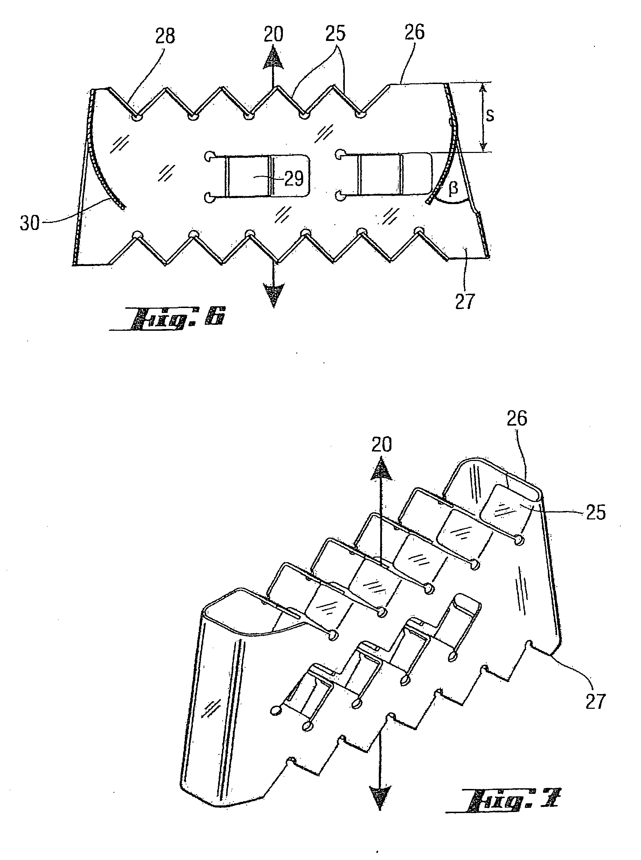

In einer in Figur 7 dargestellten Ausführungsform sind die Zusatzleitschaufeln 29 nicht gebogen sondern gerade ausgeführt, wobei sie entsprechend den Leitschaufeln 25 im Wesentlichen orthogonal von den langen Seitenwänden 21, 22 abstehen und gegenüber der Axialrichtung 20 angestellt sind. Der Anstellwinkel der jeweiligen Zusatzleitschaufel 29 ist dabei jeweils entgegengesetzt zu der jeweils stromaufwärtigen Leitschaufel 25. Auf diese Weise wird eine zusätzliche Durchmischungsstufe innerhalb des Trägerkörpers geschaffen, wobei zusätzlich noch nicht verdampfte Flüssigkeitströpfen auf die angestellten Leitschaufelflächen auftreffen und an diesen in noch kleinere Tröpfchen aufgeteilt bzw. verdampft werden.

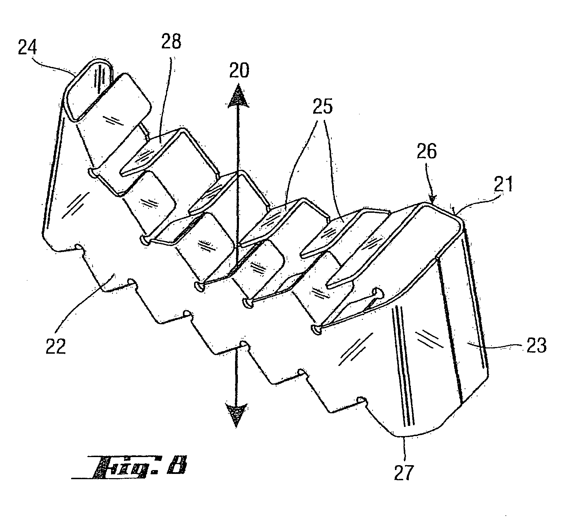

In den Figur 8 ist eine weitere Ausführungsform dargestellt, bei der die Leitschaufelreihen 28 an dem stromaufwärtigen axialen Enden 26, 27 konkav zu dem Trägerkörper verlaufen. Mit anderen Worten, die Leitschaufeln 25, die an den äußeren Seiten des Trägerkörpers 19, d.h. am nächsten an den kurzen Seitenwänden 23, 24 angeordnet sind, weisen im Abgasstrom den kürzesten Abstand zur Reduktionsmittelzuführeinrichtung 8 auf. Die weiter innen, d.h. weiter von den kurzen Seitenwänden 23, 24 entfernt angeordneten Leitschaufeln 25, sind dagegen in einem größeren Abstand zur Reduktionsmittelzuführeinrichtung 8 angeordnet. Durch diese Anordnung ist es möglich, bei gleichbleibendem durchströmbaren Querschnitt des Trägerkörpers mehr Leitschaufeln bzw. eine größere Auftrefffläche der Leitschaufeln 25 in dem Abgasstrom anzuordnen.

Im den beschriebenen Ausführungsbeispielen ist der Tragkörper ein Blechformteil, das integral die vier Seitenwände 21, 22, 23, 24 umfasst. Ferner sind die Leitschaufeln 25 an der jeweiligen langen Seitenwand 21, 22 integral ausgeformt, so dass letztlich die komplette Einrichtung 12 aus einem einzigen Blechformteil hergestellt ist. Die Herstellung kann dabei aus einem langgestreckten streifenförmigen Blechrohling erfolgen, bei dem zunächst die Leitschaufeln 25 freigeschnitten werden. Anschließend können die Leitschaufeln 25 abgewinkelt werden. Schließlich kann der Blechstreifen entsprechend dem flachen durchströmbaren Querschnitt der Einrichtung 12 gebogen werden, um die langen und kurzen Seitenwände 21, 22, 23, 24 des Tragkörpers auszubilden. Die Längsenden des Rohlings können an der einen kurzen Seitenwand 23 entsprechend einer Verbindungsnaht 31 aneinander befestigt sein.

## Patentansprüche

1. Misch- und/oder Verdampfungseinrichtung für eine Abgasanlage (5) einer Brennkraftmaschine (1), insbesondere eines Kraftfahrzeugs,
mit einem Tragkörper, der einen quer zur Axialrichtung (20) der Einrichtung (12) verlaufenden, flachen, durchströmbaren Querschnitt der Einrichtung (12) in der Umfangsrichtung umschließt,
wobei der Tragkörper zwei einander gegenüberliegende lange Seitenwände (21, 22) und zwei einander gegenüberliegende kurze Seitenwände (23, 24) aufweist, wobei die kurzen Seitenwände (23, 24) jeweils die beiden langen Seitenwände (21, 22) miteinander verbinden,
wobei zumindest an einer langen Seitenwand (21, 22) zumindest an einem axialen Ende (26, 27) mehrere Leitschaufeln (25) angeordnet sind, die in Richtung zur anderen langen Seitenwand (21, 22) abstehen und gegenüber der Axialrichtung (20) angestellt sind,
**dadurch gekennzeichnet, dass**
an zumindest einer langen Seitenwand (21, 22) in Axialrichtung (20) in einem Abstand (s) zu einem axialen Ende (26) zwischen beiden axialen Enden der wenigstens einen langen Seitenwand (21, 22) Zusatzleitschaufeln (29) angeordnet sind.

2. Misch- und/oder Verdampfungseinrichtung nach Anspruch 1, wobei die Zusatzleitschaufeln (29) von der langen Seitenwand (21, 22) in einem spitzen Winkel (α) abstehen und um eine parallel zur Axialrichtung (20) verlaufenden Achse gebogen sind.

3. Misch- und/oder Verdampfungseinrichtung nach einem der Ansprüche 1 bis 2, wobei die Länge der Zusatzleitschaufeln (29) so gewählt ist, dass ein freies Ende der Zusatzleitschaufeln über eine mittig zwischen den langen Seitenwänden (21, 22) verlaufende Längsmittelebene hinausragt.

4. Misch- und/oder Verdampfungseinrichtung nach einem der Ansprüche 1 bis 3, wobei jeweils zwei an gegenüberliegenden Seitenwänden (21, 22) angeordnete Zusatzleitschaufeln (29) so angeordnet sind, dass sie in Axialrichtung (20) im selben Abstand (s) zum axialen Ende (26, 27) der jeweiligen Seitenwand angeordnet sind.

5. Misch- und/oder Verdampfungseinrichtung nach einem der Ansprüche 1 bis 4, wobei entlang zumindest einer langen Seitenwand (21, 22) an einem axialen Ende (26, 27) quer zur Axialrichtung (20) mehrere Leitschaufeln (25) so zueinander angeordnet sind, dass die den kurzen Seitenwänden (23, 24) am nächsten gelegenen Leitschaufeln in Axialrichtung (20) einen größeren Abstand zu dem gegenüberliegenden axialen Ende (26, 27) aufweisen als die quer zur Axialrichtung (20) jeweils näher an einer Mitte des Trägerkörpers angeordneten Leitschaufeln (25).

6. Misch- und/oder Verdampfungseinrichtung nach Anspruch 1, wobei die Zusatzleitschaufeln (29) von der langen Seitenwand (21, 22) im Wesentlichen orthogonal abstehen und sich in Richtung der jeweils gegenüberliegenden Wand erstrecken, wobei sie gegenüber der Axialrichtung (20) angestellt sind.

7. Misch- und/oder Verdampfungseinrichtung nach einem der vorhergehen den Ansprüche, wobei an zumindest einer kurzen Seitenwand (23, 24) eine weitere Leitschaufel (30) angeordnet ist, wobei die weitere Leitschaufel (30) in einem spitzen Winkel (β) von der kurzen Seitenwand (23, 24) absteht und um eine orthogonal zu der Längsmittelebene verlaufenden Achse gebogen ist.

8. Misch- und/oder Verdampfungseinrichtung nach einem der vorhergehenden Ansprüche, wobei alle Leitschaufeln (25, 29, 30) integral an der jeweiligen Seitenwand (21, 22, 23, 24) ausgeformt sind.

9. Misch- und/oder Verdampfungseinrichtung nach einem der vorhergehenden Ansprüche, wobei alle Seitenwände (21, 22, 23, 24) integral am Trägerkörper ausgeformt sind.

10. Abgasanlage für eine Brennkraftmaschine (1), insbesondere eines Kraftfahrzeugs, mit wenigstens einem SCR-Katalysator (6),
mit einer Reduktionsmittelzuführeinrichtung (8), die zumindest einen Injektor (9) zum Zuführen eines Reduktionsmittels zum Abgasstrom (10) stromauf des SCR-Katalysators (6) aufweist,
mit wenigstens einer Misch- und /oder Verdampfungseinrichtung (12) nach einem der Ansprüche 1 bis 9, die zwischen dem wenigsten einen Injektor (9) und dem wenigstens einen SCR-Katalysator (6) angeordnet ist.

11. SCR-Katalysator für eine Abgasanlage (5) einer Brennkraftmaschine (1), insbesondere eines Kraftfahrzeugs,
mit einem Gehäuse (15), in dem zumindest ein SCR-Katalysatorelement (16) angeordnet ist,
mit mindestens einer Misch- und/oder Verdampfungseinrichtung (12) nach einem der Ansprüche 1 bis 9, die im Gehäuse (15) stromauf des wenigstens einen SCR-Katalysatorelements (16) angeordnet ist.

## Claims

1. A mixing and/or evaporating device for an exhaust system (5) of an internal combustion engine (1), especially of a motor vehicle,
with a carrier body (19), which surrounds, in the circumferential direction, a flat through-flow cross section of the device (12), said cross-section extending transversely to the axial direction (2) of the device (12),
wherein the carrier body (19) has two mutually opposite long side walls (21, 22) and two mutually opposite short side walls (23, 24),
wherein the short side walls (23, 24) each connect the two long side walls (21, 22) to one another,
wherein a plurality of guide blades (25), which project in the direction of the other long side wall (21, 22) and are set at a pitch angle in relation to the axial direction (20), are arranged at at least one long side wall (21, 22) at at least one axial end (26, 27),
**characterized in that**
additional guide blades (29) are arranged at least at the one long side wall (21, 22) at a distance (s) from an axial end (26) between both axial ends in the axial direction.

2. The mixing and/or evaporating device in accordance with claim 1, wherein the additional guide blades (29) project from the long side wall (21, 22) at an acute angle (α) and are bent about an axis extending in parallel to the axial direction (20).

3. The mixing and/or evaporating device in accordance with one of the claims 1 through 2, wherein the length of the additional guide blades (29) is selected to be such that a free end of the additional guide blades projects beyond a central longitudinal plane extending in the middle between the long side walls (21, 22).

4. The mixing and/or evaporating device in accordance with one of the claims 1 through 3, wherein two additional guide blades (29) each arranged at opposite side walls (21, 22) are arranged such that they are arranged at the same distance (s) in the axial direction from the axial end (26, 27) of the respective side wall.

5. The mixing and/or evaporating device in accordance with one of the claims 1 though 4, wherein a plurality of guide blades (25) are arranged along at least one long side wall (21, 22) at an axial end (26, 27) transversely to the axial direction (20) in relation to one another such that the guide blades located closest to the short side walls (23, 24) have a greater distance in the axial direction (20) from the opposite axial end (26, 27) than the guide blades (25) arranged closer to a center of the carrier body (19) at right angles to the axial direction (20).

6. The mixing and/or evaporating device in accordance with claim 1, wherein the additional guide blades (29) project essentially at right angles from the long side wall (21, 22) and extend in the direction of the respective opposite wall, and they are set at a pitch angle in relation to the axial direction (20).

7. The mixing and/or evaporating device in accordance with one of the preceding claims, wherein a further guide blade (30) is arranged at at least one short side wall (23, 24), said further guide blade (30) projecting at an acute angle (β) from the short side wall (23, 24) and being bent about an axis extending at right angles to the central longitudinal plane.

8. The mixing and/or evaporating device in accordance with one of the preceding claims, wherein all guide blades (25, 29, 30) are formed integrally on the respective side wall (21, 22, 23, 24).

9. The mixing and/or evaporating device in accordance with one of the preceding claims, wherein all side walls (21, 22, 23, 24) are formed integrally on carrier (19).

10. An exhaust system for an internal combustion engine (1), especially of a motor vehicle, with at least one SCR catalytic converter (6),
with a reducing agent feed means (8), which has at least one injector (9) for feeding a reducing agent into the exhaust gas stream (10) upstream of the SCR catalytic converter, and with at least one mixing and/or evaporating device (12) in accordance with one of the claims 1 through 9, which is arranged between the at least one injector (9) and the at least one SCR catalytic converter.

11. An SCR catalytic converter for an exhaust system (5) of an internal combustion engine (1), especially of a motor vehicle,
with a housing (15), in which at least one SCR catalytic converter element (16) is arranged, and with at least one mixing and/or evaporating device (12) in accordance with one of the claims 1 through 9, which is arranged in the housing (15) upstream of the at least one SCR catalytic converter element (16).

## Revendications

1. Dispositif de mélange et/ou d'évaporation pour une installation d'échappement (5) d'un moteur à combustion interne (1), en particulier d'un véhicule automobile,
avec un corps de support, entourant circonférentiellement une coupe transversale du dispositif (12) traversable, plate, s'étendant transversalement à la direction axiale (20) du dispositif (12),
dans lequel le corps de support présente deux parois latérales longues (21, 22) en regard l'une de l'autre et deux parois latérales courtes (23, 24) en regard l'une de l'autre, dans lequel les parois latérales courtes (23, 24) relient entre elles respectivement les deux parois latérales longues (21, 22),
dans lequel plusieurs aubes (25) sont agencées au moins sur une paroi latérale longue (21, 22) au moins à une extrémité axiale (26, 27), sont agencées en saillie de l'autre paroi latérale longue (21, 22) et sont disposées par rapport au sens axial (20),
**caractérisé en ce que**
des aubes supplémentaires (29) sont agencées sur au moins une paroi latérale longue (21, 22) dans le sens axial (20) à une distance (s) par rapport à une extrémité axiale (26) entre les deux extrémités axiales de l'au moins une paroi latérale longue (21, 22).

2. Dispositif de mélange et/ou d'évaporation selon la revendication 1, dans lequel les aubes supplémentaires (29) font saillie de la paroi latérale longue (21, 22) selon un angle aigu (α) et étant courbées autour d'un axe s'étendant parallèlement au sens axial (20).

3. Dispositif de mélange et/ou d'évaporation selon l'une quelconque des revendications 1 à 2, dans lequel la longueur des aubes supplémentaires (29) est choisie de sorte qu'une extrémité libre des aubes supplémentaires dépasse d'un plan médian longitudinal s'étendant au milieu entre les parois latérales longues (21, 22).

4. Dispositif de mélange et/ou d'évaporation selon l'une quelconque des revendications 1 à 3, dans lequel respectivement deux aubes supplémentaires (29) agencées sur des parois latérales (21, 22) en regard sont agencées de sorte qu'elles soient agencées dans le sens axial (20) à la même distance (s) de l'extrémité axiale (26, 27) de la paroi latérale respective.

5. Dispositif de mélange et/ou d'évaporation selon l'une quelconque des revendications 1 à 4, dans lequel plusieurs aubes (25) sont agencées les unes par rapport aux autres le long d'au moins une paroi latérale longue (21, 22) à une extrémité axiale (26, 27) transversalement au sens axial (20) de sorte que les aubes les plus proches des parois latérales courtes (23, 24) présentent une plus grande distance par rapport à l'extrémité axiale (26, 27) opposée que les aubes (25) agencées transversalement au sens axial (20) respectivement plus près d'un milieu du corps de support.

6. Dispositif de mélange et/ou d'évaporation selon la revendication 1, dans lequel les aubes supplémentaires (29) font saillie sensiblement orthogonalement de la paroi latérale longue (21, 22) et s'étendent en direction de la paroi respectivement opposée, celles-ci étant disposées par rapport au sens axial (20).

7. Dispositif de mélange et/ou d'évaporation selon l'une quelconque des revendications précédentes, dans lequel une autre aube (30) est agencée sur au moins une paroi latérale courte (23, 24), l'autre aube directrice (30) faisant saille selon un angle aigu (β) de la paroi latérale courte (23, 24) et étant courbée autour d'une orthogonale au plan médian longitudinal.

8. Dispositif de mélange et/ou d'évaporation selon l'une quelconque des revendications précédentes, dans lequel toutes les aubes (25, 29, 30) sont formées intégralement avec la paroi latérale (21, 22, 23, 24) respective.

9. Dispositif de mélange et/ou d'évaporation selon l'une quelconque des revendications précédentes, dans lequel toutes les parois latérales (21, 22, 23, 24) sont formées intégralement avec le corps de support.

10. Installation d'échappement pour un moteur à combustion interne (1), en particulier d'un véhicule automobile avec au moins un catalyseur RCS (6),
avec un dispositif d'alimentation d'agent de réduction (8) qui présente au moins un injecteur (9) pour l'alimentation d'un moyen de réduction pour le gaz d'échappement (10) en amont du catalyseur RCS (6),
avec au moins un dispositif de mélange et/ou d'évaporation (12) selon l'une quelconque des revendications 1 à 9, qui est agencé entre l'au moins un injecteur (9) et l'au moins un catalyseur RCS (6).

11. Catalyseur RCS pour une installation de gaz d'échappement (5) d'un moteur à combustion interne (1), en particulier d'un véhicule automobile,
avec un boîtier (15) dans lequel au moins un élément de catalyseur RCS (16) est agencé,
avec au moins un dispositif de mélange et/ou d'évaporation (12) selon l'une quelconque des revendications 1 à 9, qui est agencé dans le boîtier (15) en amont de l'au moins un élément de catalyseur RCS (6).
